(19)

Europäisches
Patentamt
European
Patent Office
Office européen
des brevets

(11)  **EP 3 772 152 B1**

(12)  ## EUROPEAN PATENT SPECIFICATION

(45) Date of publication and mention
of the grant of the patent:
**04.10.2023  Bulletin 2023/40**

(21) Application number: **19189766.9**

(22) Date of filing: **02.08.2019**

(51) International Patent Classification (IPC):
*H02J 7/00* (2006.01)   *H02J 7/02* (2016.01)
*H02M 3/158* (2006.01)   *H02M 3/28* (2006.01)
*H02M 1/32* (2007.01)

(52) Cooperative Patent Classification (CPC):
**H02M 3/1584; H02J 7/00714; H02M 1/32;**
**H02M 3/1582;** H02J 7/02; H02J 2207/20;
H02J 2310/48

(54) **BATTERY-CHARGER DEVICE AND RELATED LOAD DUMP PROTECTION METHOD**

BATTERIELADEGERÄTEVORRICHTUNG UND ZUGEHÖRIGES
LASTVERLUSTSCHUTZVERFAHREN

DISPOSITIF DE CHARGEUR DE BATTERIES ET PROCÉDÉ DE PROTECTION DE SURCHARGE
ASSOCIÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**03.02.2021  Bulletin 2021/05**

(73) Proprietor: **ABB E-mobility B.V.**
**2629 JG Delft (NL)**

(72) Inventors:
• **Betti, Giulio**
**I-52048 Monte San Savino (AR) (IT)**
• **Tombelli, Fabio**
**I-52028 Terranuova Bracciolini (AR) (IT)**

• **Grotti, Stefano**
**I-52022 Cavriglia Arezzo (AR) (IT)**
• **Pieri, Luca**
**I-51031 Agliana (PT) (IT)**

(74) Representative: **Zimmermann & Partner**
**Patentanwälte mbB**
**Postfach 330 920**
**80069 München (DE)**

(56) References cited:
**US-A1- 2013 271 077      US-A1- 2014 117 951
US-A1- 2015 123 631      US-A1- 2015 171 744
US-B1- 7 298 119         US-B1- 10 243 449**

**Description**

The present invention relates to a battery-charger device for low voltage applications, e.g. for charging stations of electric vehicles, which is capable of providing improved performances in detecting and managing possible load dump events.

As it is known, a charging station for electric vehicles is normally equipped with a multiplicity of battery-charger devices, each of which is electrically connectable to the mains and to the battery of an electric vehicle.

Battery-charger devices may have a variety of configurations.

According to a number of widely used solutions, a battery-charger device may include an input stage including a suitable rectifying section, a DC/DC conversion stage including a DC-link capacitor, a power conversion stage and an output stage including a suitable output capacitor.

Even if they generally satisfy the objectives for which they are designed, battery-charger devices of this type show some limitations, particularly when load dump events occur, i.e. when the battery suddenly disconnects for some reasons, e.g. due to a fault or due to the intervention of a protection switch.

As it is known, a sudden disconnection of the battery causes a rapid increase of the output voltage provided by the battery-charger device. Basically, this is due to the circumstance that the power conversion stage keeps on operating for a certain time interval (e.g. 150 μs) even if the battery is disconnected. During such a time interval, the energy stored in the inductors of the power conversion stage is transferred to the output capacitor of the output stage, since the output current provided by the battery-charger device to the battery becomes null.

In the state of the art, some solutions have been developed to limit output voltage spikes when load dump events occur. Relevant prior art can be found in US 2015/123631 A1. Reference standards (e.g. IEC61851-23), in fact, establish that the output voltage provided by the battery-charger device may be subject to overshoots of 10% at most.

Most simple available solutions provide for arranging an output stage having relatively high capacitance values in such a way to be capable of absorbing all the energy provided by the inductors of the power conversion stage. Unfortunately, this approach entails an unacceptable increase of costs and size for the battery-charger device.

Other available solutions provide for monitoring the output voltage at the output terminals of the battery-charger device and taking suitable counter-actions when said output voltage exceeds a given voltage threshold, e.g. by activating a suitable dissipation circuit configured to dissipate the energy stored in the inductors of the power conversion stage.

The experience has shown that these solutions based on the monitoring of the output voltage often do not provide a sufficiently fast response to load dump events, which may lead to not fulfil the technical provisions established by reference standards.

The main aim of the present invention is to provide a battery-charger device and a load dump protection method thereof, which make it possible to overcome the aforementioned problems of the known art.

In the context of this aim, an object of the present invention is to provide a battery-charger device and a load dump protection method thereof, which ensure a fast response to possible load dump events.

Another object of the present invention is to provide a battery-charger device and a load dump protection method thereof, which ensure a full compliance with the provisions of the reference standards, even when possible load dump events occur.

Another object of the present invention is to provide a battery-charger device having a very compact structure and a very small size.

Yet another object of the present invention is to provide a battery-charger device easy to manufacture at an industrial level, at competitive costs.

This aim and these objects, together with other objects that will become evident from the following description and accompanying drawings, are achieved, according to the present invention, by a battery-charger device, according to claim 1 and the related dependent claims set out below.

In a general definition thereof, the battery-charger device, according to the present invention, comprises:

- an input stage including main input terminals electrically connectable to an AC electric power source and a rectification section electrically connected to said main input terminals;
- an output stage including main output terminals electrically connectable to a battery and at least an output capacitor electrically connected to said main output terminals;
- a DC/DC conversion stage electrically connected to said input stage and said output stage and comprising at least an input capacitor and a DC/DC buck-boost converter comprising a buck-conversion section including a plurality of buck-conversion transistors, a boost section including a plurality of boost-conversion transistors and an inductive section including one or more inductors;
- first sensing means adapted to provide first detection signals indicative of one or more coil currents flowing along said inductors;
- second sensing means adapted to provide second detection signals indicative of an output current provided by said battery charging device to said battery;
- a control unit to control operation of said battery charger device, said control unit being operatively coupled to said first and second sensing means and being adapted to control said buck-conversion transistors and said boost-conversion transistors.

According to a preferred embodiment, said DC/DC conversion stage comprises:

- intermediate input terminals electrically connected to said input stage;
- intermediate output terminals electrically connected to said output stage;
- said input capacitor electrically connected between said first intermediate input terminals;
- said buck-conversion section including one or more buck-conversion branches electrically connected in parallel to said intermediate input terminals, each buck-conversion branch including a corresponding first buck-conversion transistor electrically connected between a first intermediate input terminal and a corresponding first intermediate node and including a corresponding second buck-conversion transistor electrically connected between a corresponding first intermediate node and a second intermediate input terminal;
- said boost-conversion section including one or more boost-conversion branches electrically connected in parallel to said intermediate output terminals, each boost-conversion branch including a corresponding first boost-conversion transistor electrically connected between a first intermediate output terminal and a corresponding second intermediate node and a corresponding second boost-conversion transistor electrically connected between a corresponding second intermediate node and a second intermediate output terminal;
- said inductive section including said inductors electrically connected between corresponding first intermediate nodes and second intermediate nodes.

According to the invention, the control unit of the battery-charger device is adapted to carry out a load dump protection method including the following steps:

a) acquiring first and second measurement data related to the behaviour of said coil currents and of said output current from said first and second sensing means;
b) processing said first and second measurement data to determine whether said battery is in a load dump condition;
c) if it is determined that said battery is in a load dump condition, controlling said buck-conversion transistors and said boost-conversion transistors, so that the coil currents flowing along said inductors are recirculated within said DC/DC conversion stage without charging said output capacitor;
d) acquiring first measurement data related to the behaviour of said coil currents from said first sensing means;
e) processing said first measurement data to determine whether said inductors are still energized;
f) if it is determined that said inductors are still energized, repeating the previous steps d)-e).

According to the invention said load dump protection method comprises the step:
g) if it is determined that said inductors are not energized anymore, controlling said buck-conversion transistors and said boost-conversion transistors, so that energy is transferred from said output capacitor to said input capacitor.

Preferably, the step b) of said load dump protection method includes:

- calculating an expected value for said output current;
- calculating a difference value between said expected value and a measured value of said output current;
- comparing said difference value with a predefined threshold value;
- if said difference value is higher than said predefined threshold value, determining that said battery is in a load dump condition;
- if said difference value is lower than or equal to said predefined threshold value, determining that said battery is not in a load dump condition.

Preferably, the step b) of said load dump protection method includes:

- calculating an expected value for said output current;
- calculating a difference value between said expected value and a measured value of said output current;
- comparing said difference value with a predefined threshold value;
- checking whether said output current is decreasing;
- if said difference value is higher than a predefined threshold value and said output current is decreasing, determining that said battery is in a load dump condition;
- if said difference value is lower than or equal to said predefined threshold value or said output current is not decreasing, determining that said battery is not in a load dump condition.

Preferably, the step c) of said load dump protection method includes:

- setting a duty-cycle value $D_{buck1}=0$ for said first buck-conversion transistors;
- setting a duty-cycle value $D_{buck2}=1$ for said second buck-conversion transistors;
- setting a duty-cycle value $D_{boost1}=0$ for said first boost-conversion transistors;
- setting a duty-cycle value $D_{boost2}=1$ for said second boost-conversion transistors.

Preferably, the step e) of said load dump protection method includes:

- checking whether the coil currents flowing along said inductors are null;
- if at least one of said coil currents is not null, determining that said inductors are still energized;
- if each of said coil currents is null, determining that said inductors are not energized anymore.

According to another aspect, the present invention relates to a load dump protection method for a battery-charger device, according to claim 7 and the related dependent claims set out below.

According to the load dump protection method of the invention, the battery-charger device comprises:

- an input stage including main input terminals electrically connectable to an AC electric power source and a rectification section electrically connected to said main input terminals;
- an output stage including main output terminals electrically connectable to a battery and at least an output capacitor electrically connected to said main output terminals;
- a DC/DC conversion stage electrically connected to said input stage and said output stage and comprising at least an input capacitor and a DC/DC buck-boost converter comprising a buck-conversion section including a plurality of buck-conversion transistors, a boost section including a plurality of boost-conversion transistors and an inductive section including one or more inductors;
- first sensing means adapted to provide first detection signals indicative of one or more coil currents flowing along said inductors;
- second sensing means adapted to provide second detection signals indicative of an output current provided by said battery charging device to said battery;
- a control unit to control operation of said battery charger device, said control unit being operatively coupled to said first and second sensing means and being adapted to control said buck-conversion transistors and said boost-conversion transistors.

According to a preferred embodiment, said DC/DC conversion stage comprises:

- intermediate input terminals ($IN_3$, $IN_4$) electrically connected to said input stage (2);
- intermediate output terminals ($O_3$, $O_4$) electrically connected to said output stage (2);
- said input capacitor (C1) electrically connected between said first intermediate input terminals;
- said buck-conversion section including one or more buck-conversion branches electrically connected in parallel to said intermediate input terminals, each buck-conversion branch including a corresponding first buck-conversion transistor electrically connected between a first intermediate input terminal and a corresponding first intermediate node and including a corresponding second buck-conversion transistor electrically connected between a corresponding first intermediate node and a second intermediate input terminal;
- said boost-conversion section including one or more boost-conversion branches electrically connected in parallel to said intermediate output terminals, each boost-conversion branch including a corresponding first boost-conversion transistor electrically connected between a first intermediate output terminal and a corresponding second intermediate node and a corresponding second boost-conversion transistor electrically connected between a corresponding second intermediate node and a second intermediate output terminal;
- said inductive section including said inductors electrically connected between corresponding first intermediate nodes and second intermediate nodes.

The load dump protection method of the invention includes the following steps:

a) acquiring first and second measurement data related to the behaviour of said coil currents and of said output current from said first and second sensing means;
b) processing said first and second measurement data to determine whether said battery is in a load dump condition;
c) if it is determined that said battery is in a load dump condition, controlling said buck-conversion transistors and said boost-conversion transistors, so that the coil currents flowing along said inductors are recirculated within said DC/DC conversion stage without charging said output capacitor;
d) acquiring first measurement data related to the behaviour of said coil currents from said first sensing means;
e) processing said first measurement data to determine whether said inductors are still energized;
f) if it is determined that said inductors are still energized, repeating the previous steps d)-e).

According to the invention said load dump protection method comprises the step:
g) if it is determined that said inductors are not energized anymore, controlling said buck-conversion transistors and said boost-conversion transistors, so that energy is transferred from said output capacitor to said input capacitor.

Preferably, the step b) of said load dump protection method includes:

- calculating an expected value for said output current;
- calculating a difference value between said expected value and a measured value of said output current;
- comparing said difference value with a predefined threshold value;
- if said difference value is higher than said predefined threshold value, determining that said battery is in a load dump condition;
- if said difference value is lower than or equal to said predefined threshold value, determining that said battery is not in a load dump condition.

Preferably, the step b) of said load dump protection method includes:

- calculating an expected value for said output current;
- calculating a difference value between said expected value and a measured value of said output current;
- comparing said difference value with a predefined threshold value;
- checking whether said output current is decreasing;
- if said difference value is higher than a predefined threshold value and said output current is decreasing, determining that said battery is in a load dump condition;
- if said difference value is lower than or equal to said predefined threshold value or said output current is not decreasing, determining that said battery is not in a load dump condition.

Preferably, the step c) of said load dump protection method includes:

- setting a duty-cycle value $D_{buck1}=0$ for said first buck-conversion transistors;
- setting a duty-cycle value $D_{buck1}=1$ for said second buck-conversion transistors;
- setting a duty-cycle value $D_{boost1}=0$ for said first boost-conversion transistors;
- setting a duty-cycle value $D_{boost2}=1$ for said second boost-conversion transistors.

Preferably, the step e) of said load dump protection method includes:

- checking whether the coil currents flowing along said inductors are null;
- if at least one of said coil currents is not null, determining that said inductors are still energized;
- if each of said coil currents is null, determining that said inductors are not energized anymore.

Further characteristics and advantages of the battery-charger device, according to the present invention, will become more apparent from the following description thereof, illustrated by way of non-limiting example in the accompanying drawings, wherein:

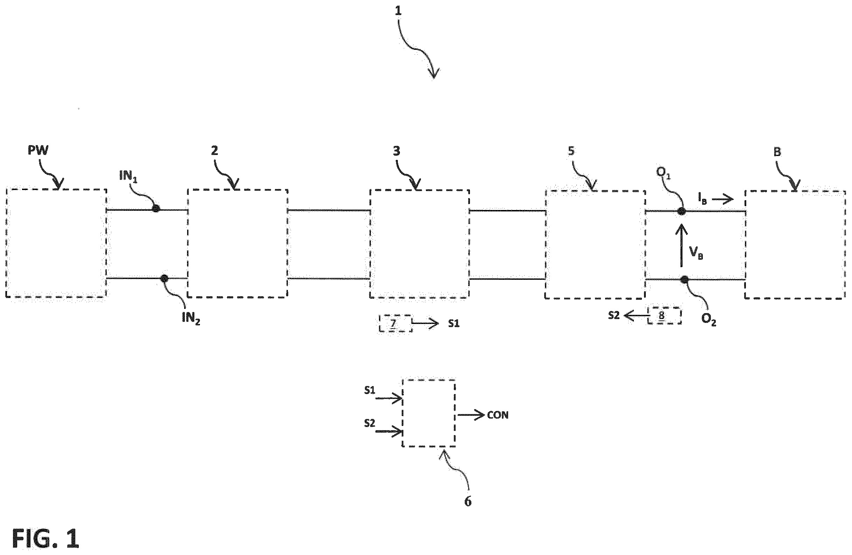

- Figure 1 shows a block diagram of the battery-charger device, according to the present invention; and
- Figures 2-3 show schematic views of the battery-charger device, according to the present invention, in a possible embodiment variant; and

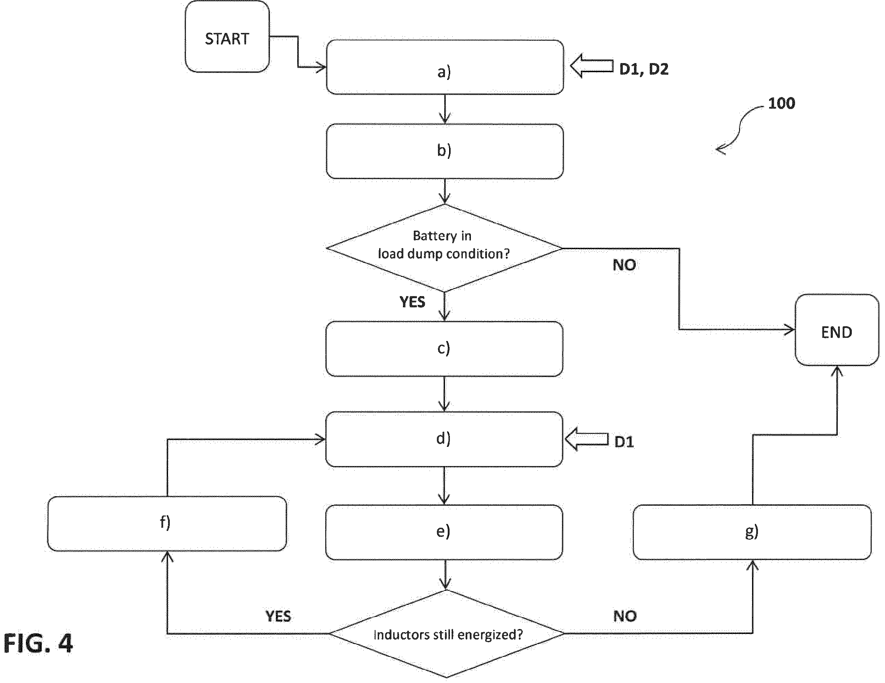

- Figure 4 shows block diagram illustrating a load dump protection method for a battery-charger device, according to the present invention;
- Figure 5 schematically shows operation of the battery-charger device of figures 2-3 during the execution of the load dump protection method of figure 4.

With reference to the aforementioned figures, in an aspect, the present invention relates to a battery-charger device 1 for low voltage applications, in particular for charging stations of electric vehicles.

The battery-charger device 1 performs an AC/DC type power conversion between an electric power source PW operating in alternating current (AC) conditions, e.g. the mains, and a battery B, e.g. the battery of an electric vehicle.

Preferably, the power source PW may be of a single-phase type or multi-phase type, according to the needs.

In general, the power source PW is of a known type and therefore, for obvious purposes of brevity, it will only be described here as it relates to significant aspects of the invention.

The battery-charger device 1 comprises at least a pair of main input terminals $IN_1$, $IN_2$ electrically connectable to the electric power source PW.

Advantageously, the battery-charger device 1 comprises a pair of input terminals for each electric phase of the electric power source PW.

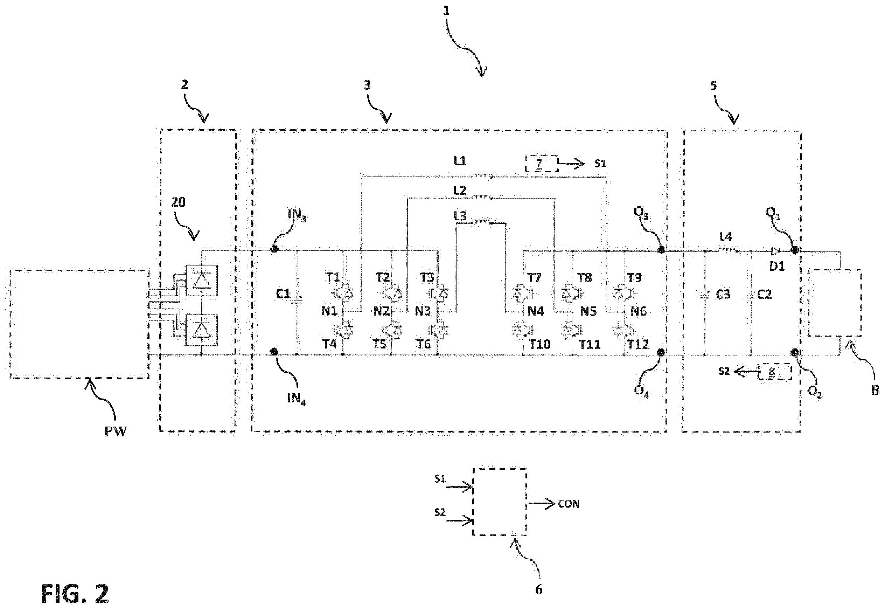

As an example, the battery-charger device 1 may comprise multiple (e.g. three) pairs of input terminals, since the power source PW is a multi-phase type, for example of three-phase type as shown in figure 2.

The battery-charger device 1 comprises an input stage 2 including the input terminals $IN_1$, $IN_2$ and a rectification section 20 electrically connected in cascade to said input terminals.

In operation, the rectification section 20 receives an AC input voltage and an AC input current (single-phase or multi-phase) from the power source PW and outfeeds a rectified voltage and current to the downstream electronic stages of the battery-charger device (reference is made to a power flow direction from the power source PW to the battery B). Preferably, the rectification section 20 is a diode bridge with 4*N or 6*N impulses, where N is the number of electrical phases of the electric power source PW. For example, when the electric power source PW is a three-phase type, as shown in figures 2-3, the rectification section 20 is a diode bridge with 12 or 18 impulses.

In general, however, the input stage 2 is of a known type and therefore, for obvious purposes of brevity, it will only be described here as it relates to significant aspects of the invention. The battery-charger device 1 comprises a pair of main output terminals $O_1$, $O_2$ electrically connectable to the battery B operating in direct current (DC) conditions.

In operation, at the output terminals $O_1$, $O_2$, the battery-charger device 1 normally provides a DC output voltage $V_B$ and a DC output current $I_B$.

Conveniently, the battery-charger device 1 comprises an output stage 5 including the main output terminals $O_1$, $O_2$ and at least an output capacitor C2 electrically connected between said main output terminals.

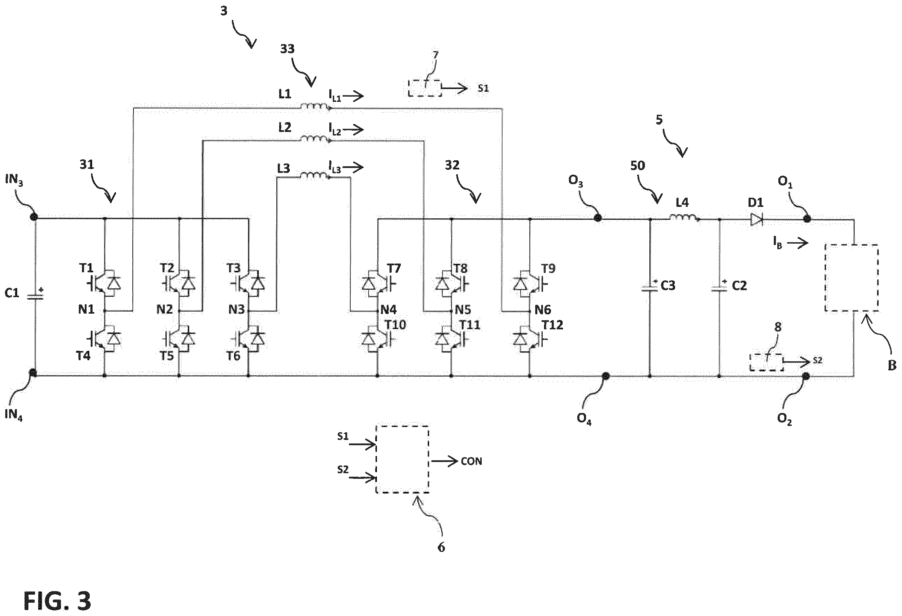

Preferably, the output stage 5 comprises a passive filtering section 50 (figure 3) electrically connected upstream to the main output terminals $O_1$, $O_2$ in parallel with respect to the output capacitor C2.

Preferably, the passive filtering section 50 is an LC-type filtering stage comprising a filtering capacitor C3 in parallel with respect to the output capacitor C2 and a filtering inductance L4 electrically connected in series with a main output terminal $O_1$.

Preferably, the output stage 5 further comprises a blocking diode D1 electrically connected in series to an output terminal to block a possible current circulation from the battery B to the battery-charger device 1, during the charging process of said battery.

The battery-charger device 1 comprises a DC/DC conversion stage 3 electrically connected between the input stage 2 and the output stage 5.

The DC/DC conversion stage 3 comprises intermediate input terminals $IN_3$, $IN_4$ electrically connected to the input stage 2 and intermediate output terminals $O_3$, $O_4$ electrically connected to said output stage 5.

In operation, the DC/DC conversion stage 3 receives a rectified voltage and a rectified current from the input stage 2 and outfeeds to the output stage 5 an adjustable DC voltage and a DC current.

The DC/DC conversion stage 3 comprises at least an input capacitor C1 electrically connected between the intermediate input terminals $IN_3$, $IN_4$. The input capacitor C1 is apparently intended to operate as a so-called DC-Link capacitor.

The DC/DC conversion stage 3 additionally comprises a DC/DC converter 30 electrically connected with the intermediate input terminals $IN_3$, $IN_4$, in parallel to the input capacitor C1, and with the output terminals $O_3$, $O_4$.

The DC/DC converter 30 has a buck-boost configuration. This solution makes it possible to offer a wide range of output values for the DC voltage provided at the intermediate output terminals $O_3$, $O_4$ electrically connected to the output stage 5.

In general (figure 3), the buck-boost converter 30 comprises a buck-conversion section 31 electrically connected to the intermediate input terminals $IN_3$, $IN_4$ and including a plurality of buck-conversion transistors T1, T2, T3, T4, T5, T6, a boost-conversion section 32 electrically connected to the intermediate output terminals $O_3$, $O_4$ and including a plurality of boost-conversion transistors T7, T8, T9, T10, T11, T12 and an inductive section 33 electrically connected between said buck-conversion section and said boost-conversion section and including one or more inductors L1, L2, L3.

Figures 2-3 illustrate a preferred configuration for the DC/DC buck-boost converter 30. Preferably, the buck-conversion section 31 includes one or more buck-conversion branches electrically connected in parallel between the intermediate input terminals $IN_3$, $IN_4$.

Each buck-conversion branch includes a corresponding first buck-conversion transistor T1, T2, T3 electrically connected between a first intermediate input terminal $IN_3$ (e.g. having positive voltage polarity in operation) and a corresponding first intermediate node N1, N2, N3.

Each buck-conversion branch further includes a corresponding second buck-conversion transistor T4, T5, T6 electrically connected between a corresponding first intermediate node N1, N2, N3 and a second intermediate input terminal $IN_4$ (e.g. having negative voltage polarity in operation).

Preferably, the boost-conversion section 32 includes one or more boost-conversion branches electrically connected in parallel between the intermediate output terminals $O_3$, $O_4$.

Each boost-conversion branch includes a corresponding first boost-conversion transistor T7, T8, T9 electrically connected between a first intermediate output terminal $O_3$ (e.g. having positive voltage polarity in operation) and a corresponding second intermediate node N4, N5, N6.

Each boost-conversion branch further includes a corresponding second boost-conversion transistor T10, T11, T12 electrically connected between a corresponding second intermediate node N4, N5, N6 and a second intermediate output terminal $O_4$ (e.g. having negative voltage polarity in operation).

Preferably, the inductive section 33 includes one or more inductors L1, L2, L3, each of which is electrically connected between a corresponding first intermediate node N1, N2, N3 and a second intermediate node N4, N5, N6.

The buck-boost converter 30 may be of the multi-phase type, for example three-phase as shown in figures 2-3. In this case, it comprises a plurality of buck-conversion branches (e.g. three), a plurality of boost-conversion branches (e.g. three) and a plurality of inductors (e.g. three). However, the buck-boost converter 30 may be of the single-phase type, according to the needs. In this case, it will comprise a single buck-conversion branch, a single boost conversion branch and a single inductor.

In general, the configuration of the buck-boost converter 30 is of a known type and therefore, for obvious purposes of brevity, it will only be described here as it relates to significant aspects of the invention.

The buck-conversion transistors T1, T2, T3, T4, T5, T6 and the boost-conversion transistors T7, T8, T9, T10, T11, T12 may be devices of a known type, for example BJT, MOSFET, IGBT, GTO or a similar type.

In operation, the transistor T1-T12 switch in a conduction condition or in an interdiction condition in response to suitable control signals received at a control terminal (e.g. the gate terminal).

According to the invention, the battery-charger device 1 comprises first sensing means 7 adapted to provide first detection signals S1 indicative of one or more coil currents $I_{L1}$, $I_{L2}$, $I_{L3}$ flowing along the inductors L1, L2, L3 of the DC/DC buck-boost converter 30.

The sensing means 7 may include one or more current sensors of known type (e.g. a Hall sensors for each inductor L1, L2, L3) suitably arranged to provide first detection signals S1 indicative of the behaviour of each coil current $I_{L1}$, $I_{L2}$, $I_{L3}$.

According to the invention, the battery-charger device 1 comprises second sensing means 8 adapted to provide second detection signals S2 indicative of an output current $I_B$ provided by the battery charging device 1 to the battery B.

The sensing means 8 may include a current sensor of known type (e.g. a Hall sensor or shuntresistor) suitably arranged to provide second detection signals S2 indicative of the behaviour of the output current $I_B$.

According to the invention, the battery-charger device 1 comprises a control unit 6 adapted to control operation of this latter.

Preferably, the control unit 6 comprises digital data processing resources, for example comprising one or more micro-processors, which are conveniently configured to execute software instructions stored on a memory support for carrying out its functionalities.

In particular, the control unit 6 is adapted to control operation of the buck-boost converter 30. To this aim, the control unit 6 is operatively coupled with the first and second sensing means 7, 8 to receive and process the detection signals S1, S2 provided by these latter.

The control unit 6 is further operatively coupled with the buck-conversion transistors T1-T6 and the boost-conversion transistors T7-T12 to control these latter by providing suitable control signals CON (e.g. voltage control signals).

Conveniently, the control unit 6 is adapted to control operation of the buck-conversion transistors T1-T6 and of the boost-conversion transistors T7-T12 by carrying out a duty-cycle control.

In general, such a duty-cycle control may be carried out in a known manner by calculating or setting suitable duty-cycles values for the buck-conversion transistors T1-T6 and the boost-conversion transistors T7-T12.

Preferably, in operation, the control unit 6 sets a duty-cycle value $D_{buck1}$ for the first buck-conversion transistors T1-T3 and sets a duty-cycle value $D_{buck2} = 1 - D_{buck1}$ for the second buck-conversion transistors T4-T6.

Preferably, in operation, the control unit 6 sets a duty-cycle value $D_{boost2}$ for the second boost-conversion transistors T10-T12 and sets a duty-cycle value $D_{boost1} = 1 - D_{boost2}$ for the first boost-conversion transistors T7-T9.

In principle, the control unit 6 may control operation of the buck-conversion transistors T1-T6 independently from the boost-conversion transistors T7-T12, and vice-versa.

According to some embodiments of the invention, however, the control unit 6 may set a same duty-cycle value $D_{buck1} = D_{boost2}$ for the first buck-conversion transistors T1-T3 and for the second boost-conversion transistors T10-12 and a same duty-cycle value $D_{buck2} = D_{boost1}$ for the second buck-conversion transistors T4-T6 and for the first boost-conversion transistors T7-T9.

Normally, the control unit 6 may control the buck-boost converter 30 in such a way to make this latter to operate according to different operation modes.

When it is desired to increase the output voltage $V_B$ provided at the output terminals $O_1$ and $O_2$ with respect to the voltage of the input capacitor C1, the buck-boost converter 30 may operate according to a boost mode. In this case, the control unit 6 sets fixed duty-cycle values for the buck-conversion transistors T1-T6 and continuously adjusts the duty-cycle values for the boost-conversion transistors T7-T12 to regulate the output voltage.

When it is desired to decrease the output voltage $V_B$ provided at the output terminals $O_1$ and $O_2$ with respect to the voltage of the input capacitor C1, the buck-boost converter 30 may operate according to a buck mode. In this case, the control unit 6 sets fixed duty-cycle values for the boost-conversion transistors T7-T12 and continuously adjusts the duty-cycle values for the buck-conversion transistors T1-T6 to regulate the output voltage.

An important aspect of the present invention, consists in that the control unit 6 is adapted to carry out a load dump protection method 100 to detect and manage a load dump event for the battery-charger device 1.

For the sake of clarity, it is specified that the term "load dump event" identifies an operating condition in which the battery B electrically disconnects from the output terminals O1, O2 of the battery-charger device 1, e.g. due to a fault or to the intervention of a protection switch (not shown).

Conveniently, in order to implement the load dump protection method 100, the data processing resources of the control unit 6 execute specific software instructions stored on a memory support.

According to the invention, the load dump protection method 100 comprises a step a) of acquiring first measurement data D1 related to the behaviour of coil currents $I_{L1}$, $I_{L2}$, $I_{L3}$ circulating along the inductors L1, L2, L3 of the buck-boost converter 30 and second measurement data D2 related to the behaviour of the output current $I_B$ provided to the battery B by the battery-charger device 1.

Conveniently, the step acquisition a) may be carried out by suitably processing the first and second detection signals S1, S2 received from the first and second sensing means 7, 8, for example by carrying out a digital sampling of said detection signals, if these latter are still of analog type.

According to the invention, the load dump protection method 100 comprises a step b) of processing the acquired first and second measurement data D1, D2 to determine whether the battery B is in a load dump condition, i.e. it is electrically disconnected from the battery-charger device 1.

Differently from the solutions of the state of the art, the determination of whether the battery B is in a load dump condition is carried out by checking whether there is an unbalancing condition between the coil currents $I_{L1}$, $I_{L2}$, $I_{L3}$ flowing along the inductors L1, L2, L3 of the buck-boost converter 30.

In fact, in normal conditions, i.e. in absence of a load dump event, the coil currents $I_{L1}$, $I_{L2}$, $I_{L3}$ are substantially balanced with the output current $I_B$ as the energy stored by the inductors L1, L2, L3 of the buck-boost converter 30 is substantially transferred to the battery B.

The determination of a load dump condition can thus be carried out by comparing the overall current provided by the inductors L1, L2, L3 in a normal operation of the buck-boost converter 30 with the actual output current $I_B$ provided by the battery-charger device 1 to the battery B.

Preferably, the step b) of the load dump protection method 100 includes calculating an expected value $I_{EB}$ for the output current that should be provided by the battery-charger device 1 in normal operation.

In general, the expected value $I_{EB}$ is calculated basing on the first measurement data D1 related to the to the behaviour of coil currents $I_{L1}$, $I_{L2}$, $I_{L3}$ and depending on the operation mode of the buck-boost converter 30.

If the buck-boost converter 30 operates according to a buck mode, the expected value $I_{EB}$ may be calculated according to the following relation:

$$I_{EB} = I_{L1} + I_{L2} + I_{L3}$$

where the $I_{L1}$, $I_{L2}$, $I_{L3}$ are the measured values of the coil currents flowing along the inductors L1, L2, L3 of the buck-boost converter 30.

If the buck-boost converter 30 operates according to a boost mode, the expected value $I_{EB}$ may be calculated according to the following relation:

$$I_{EB} = (I_{L1} + I_{L2} + I_{L3})*(1-D_{boost2})$$

where the $I_{L1}$, $I_{L2}$, $I_{L3}$ are the measured values of the coil currents flowing along the inductors L1, L2, L3 of the buck-boost converter 30 and $D_{boost2}$ is the duty-cycle value set for the second boost-conversion transistors T7-T12 of the buck-boost converter 30.

Preferably, the step b) of the load dump protection method 100 includes calculating a difference value $I_D$ between the calculated expected value $I_{EB}$ and the measured value $I_B$ of the output current actually provided by the battery-charger device 1.

In practice, the difference value $I_D$ is calculated as:

$$I_D = I_{EB} - I_B$$

where the $I_{EB}$ is the calculated expected value for the output current and $I_B$ is the measured value of the output current.

Preferably, the step b) of the load dump protection method 100 includes comparing the calculated difference value $I_D$ with a predefined threshold $I_{TH}$.

Preferably, if the calculated difference value $I_D$ is higher than the predefined threshold value $I_{TH}$, it is determined that the battery B is in a load dump condition, i.e. it is electrically disconnected from the battery-charger device 1.

Conversely, if the calculated difference value $I_D$ is lower than or equal to the predefined threshold value $I_{TH}$, it is determined that the battery B is not in a load dump condition, i.e. it is still electrically connected with the battery-charger device 1.

According to a preferred embodiment of the invention, the step b) of the load dump protection method 100 includes the additional step of checking whether the output current $I_B$ actually provided by the battery-charger device 1 is decreasing.

Such a checking activity can be easily carried out by calculating a derivative value of the output current $I_B$ and checking whether said derivative value is negative.

Preferably, if the calculated difference value $I_D$ is higher than the predefined threshold value $I_{TH}$ and the measured output current $I_B$ is decreasing, it is determined that the battery B is in a load dump condition, i.e. it is electrically disconnected from the battery-charger device 1. Preferably, if the calculated difference value $I_D$ is lower than or equal to the predefined threshold value $I_{TH}$ or the measured output current $I_B$ is not decreasing, it is determined that the battery B is not in a load dump condition.

The above-described solution apparently provides for more robust determination criteria for determining whether the battery B is not in a load dump condition.

According to the invention, if it is determined that the battery B is not in a load dump condition, the load dump protection method 100 is conveniently terminated.

Instead, if it is determined that the battery B is in a load dump condition, the load dump protection method 100 comprises a step c) of controlling (by suitably setting the duty-cycle values $D_{buck1}$, $D_{buck2}$, $D_{boost1}$, $D_{boost2}$) the buck-conversion transistors and the said boost-conversion transistors in such a way that that the coil currents $I_{L1}$, $I_{L2}$, $I_{L3}$ are recirculated within the DC/DC conversion stage 3 without charging the output capacitor C2.

Conveniently, at the above-mentioned step c), the load dump protection method 100 provides for setting the operating conditions of the buck-conversion transistors and of the said boost-conversion transistors in such a way to form a conductive path along which the coil currents $I_{L1}$, $I_{L2}$, $I_{L3}$ can circulate without involving the output capacitor C2.

In this way, the energy stored in the inductors L1 L2, L3 can be conveniently dissipated without being transferred to the output capacitor C2.

Preferably, according to the embodiment shown in figures 2-3, the step c) of the dump load protection method 100 comprises:

- setting a duty-cycle value $D_{buck1}$=0 for the first buck-conversion transistors T1-T3;
- setting a duty-cycle value $D_{buck1}$=1 for the second buck-conversion transistors T4-T6;
- setting a duty-cycle value $D_{boost1}$=0 for the first boost-conversion transistors T7-T9;
- setting a duty-cycle value $D_{boost2}$=1 for the second boost-conversion transistors T10-T12.

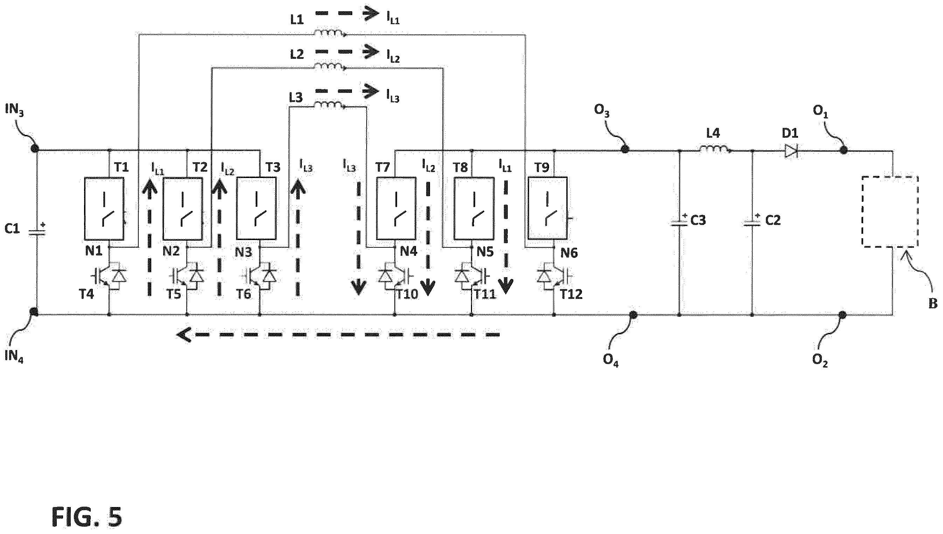

A schematic representation of the conductive path followed by the coil currents $I_{L1}$, $I_{L2}$, $I_{L3}$ upon the execution of the step c) of the load dump protection method 100 is shown in figure 5 with reference to the embodiment shown in figures 2-3.

It is evident how the first buck-conversion transistor T1-T3 and the first boost-conversion transistor T7-T9 are continuously kept in an interdiction condition as a null duty-cycle value is set for them ($D_{buck1}$= $D_{boost1}$=0) while the second buck-conversion transistor T4-T6 and the second boost-conversion transistor T10-T12 are continuously kept in a conduction condition as a full duty-cycle value is set for them ($D_{buck2}$= $D_{boost2}$=1).

According to the invention, following the execution of the above-mentioned step c), the load dump protection method 100 provides for cyclically monitoring the behaviour of the coil currents $I_{L1}$, $I_{L2}$, $I_{L3}$ to determine whether the inductors L1, L2, L3 of the buck-boost converter 30 are still energized.

The load dump protection method 100 thus includes the step d) of acquiring first measurement data D1 related to the behaviour of the coil currents $I_{L1}$, $I_{L2}$, $I_{L3}$ from the first sensing means 7. The acquisition of the first measurement data D1 can be suitably carried out as described above.

The load dump protection method 100 then includes the step e) of processing the acquired first measurement data D1 to determine whether the inductors L1, L2, L3 are still energized. Preferably, the step e) of the load dump protection method 100 comprises:

- checking whether the coil currents $I_{L1}$, $I_{L2}$, $I_{L3}$ flowing along the inductors L1, L2, L3 are null;
- determining that the inductors L1, L2, L3 are still energized, if at least one of the coil currents $I_{L1}$, $I_{L2}$, $I_{L3}$ is not null;
- determining that the inductors L1, L2, L3 are not energized anymore, if each coil current $I_{L1}$, $I_{L2}$, $I_{L3}$ is null.

If it is determined that the inductors L1, L2, L3 are still energized, the load dump protection method 100 conveniently includes the step f) of repeating the above-illustrated acquisition step d) and determination step e).

In general, if it is determined that the inductors L1, L2, L3 are not energized anymore, the load dump protection method 100 might be terminated.

According to preferred embodiment of the invention, however, if it is determined that the inductors L1, L2, L3 are not energized anymore, the load dump protection method 100 comprises an additional step g) of controlling (by properly setting the duty-cycle values $D_{buck1}$, $D_{buck2}$, $D_{boost1}$, $D_{boost2}$) the buck-conversion transistors T1-T6 and the boost-conversion transistors T7-T12 in such a way that energy is transferred to the output capacitor C2 to the input capacitor C1. In this way, the output voltage $V_B$ provided by the battery-charger device 1 can be brought to 0 V. This solution may be quite advantageous in view of a possible electrical reconnection of the battery B with the battery charging device 1.

Conveniently, at the above-mentioned step g), the load dump protection method 100 provides for setting the operating conditions of the buck-conversion transistors and of the said boost-conversion transistors in such a way to form a conductive path (not shown) along which the residual energy stored by the output capacitor C2 can be suitably dissipated and possibly transferred to the input capacitor C1.

Following the execution of the above-mentioned step g), the load dump protection method 100 may be conveniently terminated.

It is apparent from the above that, in a further important aspect, the present invention relates to a load dump protection method 100 including the steps a)-f) and possibly a)-g) described above.

Differently from the solutions of the state of the art, the load dump protection method 100 of the invention does not monitor the output voltage $V_B$ provided by the battery-charger device 1 to detect a load a dump event.

Instead, the load dump protection method 100 provides for directly monitoring the physical quantities causing the possible overshoots of the output voltage $V_B$ when a dump event occurs, i.e. the coil currents $I_{L1}$, $I_{L2}$, $I_{L3}$ circulating along the inductors L1, L2, L3 of the buck-boost converter 30.

This solution allows remarkably reducing the response time needed to take counter-measures to limit the overshoot of the output voltage $V_B$ deriving from a load dump event. As a consequence, the output voltage $V_B$ may be maintained within the value ranges established by the reference standards, even when possible load dump events occur.

Conveniently, the load dump protection method 100 may be cyclically executed, according to the needs. This allows implementing a continuous protection from possible load dump events during normal operation of the battery-charger device 1.

It can be seen in practice how the battery-charger device, according to the present invention, achieves the pre-set objects.

The battery-charger device 1 and the load dump protection method 100, according to the invention, ensure a fast response to possible load dump events.

Therefore, they ensure a full compliance with the provisions of the reference standards, even when possible load dump events occur.

The battery-charger device, according to the present invention, has a very compact structure that makes it particularly suitable for use in charging stations for electric vehicles.

The battery-charger device, according to the present invention, is characterised for its notable manufacturing simplicity. It can be easily produced industrially using known types of printed circuit manufacture.

The battery-charger device, according to the present invention, is therefore easily manufactured industrially at competitive costs with respect to similar devices currently available.

**Claims**

1. Battery-charger device (1) comprising:

   - an input stage (2) including main input terminals ($IN_1$, $IN_2$) electrically connectable to an AC electric power source (PW) and a rectification section (20) electrically connected to said main input terminals;
   - an output stage (5) including main output terminals ($O_1$, $O_2$) electrically connectable to a battery (B) and at least an output capacitor (C2) electrically connected to said main output terminals;
   - a DC/DC conversion stage (3) including intermediate input terminals ($IN_3$, $IN_4$) electrically connected to said input stage (2) and intermediate output terminals ($O_3$, $O_4$) electrically connected to said output stage (5), said DC/DC conversion stage comprising at least an input capacitor (C1) electrically connected between said intermediate input terminals ($IN_3$, $IN_4$), a DC/DC buck-boost converter (30) comprising a buck-conversion section (31) electrically connected between said intermediate input terminals ($IN_3$, $IN_4$) and including a plurality of buck-conversion transistors (T1, T2, T3, T4, T5, T6), a boost-conversion section (32) electrically connected between said intermediate output terminals ($O_3$, $O_4$) and including a plurality of boost-conversion transistors (T7, T8, T9, T10, T11, T12), and an inductive section (33) electrically connected between said buck-conversion section (31) and said boost-conversion section (32) and including one or more inductors (L1, L2, L3);
   - first sensing means (7) adapted to provide first detection signals (S1) indicative of one or more coil currents ($I_{L1}$, $I_{L2}$, $I_{L3}$) flowing along said inductors (L1, L2, L3);
   - second sensing means (8) adapted to provide second detection signals (S2) indicative of an output current ($I_B$) provided by said battery charging device to said battery;
   - a control unit (6) to control operation of said battery charger device, said control unit being operatively coupled to said first and second sensing means and being adapted to control said buck-conversion transistors and said boost-conversion transistors;

**characterised in that** said control unit (6) is adapted to carry out a load dump protection method (100) including the following steps:

   a) acquiring first and second measurement data (S1, S2) related to the behaviour of said coil currents ($I_{L1}$, $I_{L2}$, $I_{L3}$) and of said output current ($I_B$) from said first and second sensing means (7, 8);
   b) processing said first and second measurement data (S1, S2) to determine whether said battery (B) is in a load dump condition;
   c) if it is determined that said battery (B) is in a load dump condition, controlling said buck-conversion transistors and said boost-conversion transistors, so that the coil currents ($I_{L1}$, $I_{L2}$, $I_{L3}$) flowing along said inductors (L1, L2, L3) are recirculated within said DC/DC conversion stage without charging said output capacitor (C2);
   d) acquiring first measurement data (S1) related to the behaviour of said coil currents ($I_{L1}$, $I_{L2}$, $I_{L3}$) from said first sensing means (7);
   e) processing said first measurement data (S1) to determine whether said inductors (L1, L2, L3) are still energized;
   f) if it is determined that said inductors (L1, L2, L3) are still energized, repeating the previous steps d)-e);
   g) if it is determined that said inductors (L1, L2, L3) are not energized anymore, controlling said buck-conversion transistors and said boost-conversion transistors, so that energy is transferred from said output capacitor (C2) to said input capacitor (C1).

2. Battery charging device, according to claim 1, **characterised in that** the step b) of said load dump protection method (100) includes:

- calculating an expected value ($I_{EB}$) for said output current;
- calculating a difference value ($I_D$) between said expected value and a measured value ($I_B$) of said output current;
- comparing said difference value ($I_D$) with a predefined threshold value ($I_{TH}$);
- if said difference value ($I_D$) is higher than said predefined threshold value ($I_{TH}$), determining that said battery (B) is in a load dump condition;
- if said difference value ($I_D$) is lower than or equal to said predefined threshold value ($I_{TH}$), determining that said battery (B) is not in a load dump condition.

3. Battery charging device, according to one of the previous claims, **characterised in that** the step b) of said load dump protection method (100) includes:

- calculating an expected value ($I_{EB}$) for said output current;
- calculating a difference value ($I_D$) between said expected value and a measured value ($I_B$) of said output current;
- comparing said difference value ($I_D$) with a predefined threshold value ($I_{TH}$);
- checking whether said output current is decreasing;
- if said difference value ($I_D$) is higher than a predefined threshold value ($I_{TH}$) and said output current ($I_B$) is decreasing, determining that said battery (B) is in a load dump condition;
- if said difference value ($I_D$) is lower than or equal to said predefined threshold value ($I_{TH}$) or said output current ($I_B$) is not decreasing, determining that said battery (B) is not in a load dump condition.

4. Battery charging device, according to one of the previous claims, **characterised in that**:

- said buck-conversion section (31) includes one or more buck-conversion branches electrically connected in parallel to said intermediate input terminals ($IN_3$, $IN_4$), each buck-conversion branch including a corresponding first buck-conversion transistor (T1, T2, T3) electrically connected between a first intermediate input terminal ($IN_3$) and a corresponding first intermediate node (N1, N2, N3) and including a corresponding second buck-conversion transistor (T4, T5, T6) electrically connected between a corresponding first intermediate node (N1, N2, N3) and a second intermediate input terminal ($IN_4$);
- said boost-conversion section (32) includes one or more boost-conversion branches electrically connected in parallel to said intermediate output terminals ($O_3$, $O_4$), each boost-conversion branch including a corresponding first boost-conversion transistor (T7, T8, T9) electrically connected between a first intermediate output terminal ($O_3$) and a corresponding second intermediate node (N4, N5, N6) and a corresponding second boost-conversion transistor (T10, T11, T12) electrically connected between a corresponding second intermediate node (N4, N5, N6) and a second intermediate output terminal ($O_4$);
- said inductive section (33) includes said inductors (L1, L2, L3) electrically connected between corresponding first intermediate nodes (N1, N2, N3) and second intermediate nodes (N4, N5, N6).

5. Battery charging device, according to claim 4, **characterised in that** the step c) of said load dump protection method (100) includes:

- setting a duty-cycle value $D_{buck1}=0$ for said first buck-conversion transistors (T1, T2, T3);
- setting a duty-cycle value $D_{buck1}=1$ for said second buck-conversion transistors (T4, T5, T6);
- setting a duty-cycle value $D_{boost1}=0$ for said first boost-conversion transistors (T7, T8, T9);
- setting a duty-cycle value $D_{boost2}=1$ for said second boost-conversion transistors (T10, T11, T12).

6. Battery charging device, according to one of the previous claims, **characterised in that** the step e) of said load dump protection method (100) includes:

- checking whether the coil currents ($I_{L1}$, $I_{L2}$, $I_{L3}$) flowing along said inductors (L1, L2, L3) are null;
- if at least one of said coil currents ($I_{L1}$, $I_{L2}$, $I_{L3}$) is not null, determining that said inductors (L1, L2, L3) are still energized;
- if each of said coil currents ($I_{L1}$, $I_{L2}$, $I_{L3}$) is null, determining that said inductors (L1, L2, L3) are not energized anymore.

7. A load dump protection method (100) for a battery-charger device (1), wherein said battery charging device comprises:

- an input stage (2) including main input terminals (IN1, IN2) electrically connectable to an AC electric power source (PW) and a rectification section (20) electrically connected to said main input terminals (IN1, IN2);
- an output stage (5) including main output terminals (01, 02) electrically connectable to a battery (B) and at least an output capacitor (C2) electrically connected to said main output terminals;

- a DC/DC conversion stage (3) including intermediate input terminals ($IN_3$, $IN_4$) electrically connected to said input stage (2) and intermediate output terminals ($O_3$, $O_4$) electrically connected to said output stage (5), said DC/DC conversion stage comprising at least an input capacitor (C1) electrically connected between said intermediate input terminals ($IN_3$, $IN_4$), a DC/DC buck-boost converter (30) comprising a buck-conversion section (31) electrically connected between said intermediate input terminals ($IN_3$, $IN_4$) and including a plurality of buck-conversion transistors (T1, T2, T3, T4, T5, T6), a boost-conversion section (32) electrically connected between said intermediate output terminals ($O_3$, $O_4$) and including a plurality of boost-conversion transistors (T7, T8, T9, T10, T11, T12), and an inductive section (33) electrically connected between said buck-conversion section (31) and said boost-conversion section (32) and including one or more inductors (L1, L2, L3);

- first sensing means (7) adapted to provide first detection signals (S1) indicative of one or more coil currents ($I_{L1}$, $I_{L2}$, $I_{L3}$) flowing along said inductors (L1, L2, L3);

- second sensing means (8) adapted to provide second detection signals (S2) indicative of an output current ($I_B$) provided by said battery charging device to said battery;

**characterised in that** it comprises the following steps:

a) acquiring first and second measurement data (S1, S2) related to the behaviour of said coil currents ($I_{L1}$, $I_{L2}$, $I_{L3}$) and of said output current ($I_B$) from said first and second sensing means (7, 8);
b) processing said first and second measurement data (S1, S2) to determine whether said battery (B) is in a load dump condition;
c) if it is determined that said battery (B) is in a load dump condition, controlling said buck-conversion transistors and said boost-conversion transistors, so that said coil currents ($I_{L1}$, $I_{L2}$, $I_{L3}$) are recirculated within said DC/DC conversion stage without charging said output capacitor (C2);
d) acquiring first measurement data (S1) related to the behaviour of said coil currents ($I_{L1}$, $I_{L2}$, $I_{L3}$) from said first sensing means (7);
e) processing said first measurement data (S1) to determine whether said inductors (L1, L2, L3) are still energized;
f) if it is determined that said inductors (L1, L2, L3) are still energized, repeating the previous steps d)-e);

g) if it is determined that said inductors (L1, L2, L3) are not energized anymore, controlling said buck-conversion transistors and said boost-conversion transistors, so that energy is transferred from said output capacitor to said input capacitor.

8. Method, according to claim 7, **characterised in that** said step b) includes:

- calculating an expected value ($I_{EB}$) for said output current;
- calculating a difference value ($I_D$) between said expected value and a measured value ($I_B$) of said output current;
- comparing said difference value ($I_D$) with a predefined threshold value ($I_{TH}$);
- if said difference value ($I_D$) is higher than said predefined threshold value ($I_{TH}$), determining that said battery (B) is in a load dump condition;
- if said difference value ($I_D$) is lower than or equal to said predefined threshold value ($I_{TH}$), determining that said battery (B) is not in a load dump condition.

9. Method, according to one of the claims from 7 to 8, **characterised in that** said step b) includes:

- calculating an expected value ($I_{EB}$) for said output current;
- calculating a difference value ($I_D$) between said expected value and a measured value ($I_B$) of said output current;
- comparing said difference value ($I_D$) with a predefined threshold value ($I_{TH}$);
- checking whether said output current is decreasing;
- if said difference value ($I_D$) is higher than a predefined threshold value ($I_{TH}$) and said output current is decreasing, determining that said battery (B) is in a load dump condition;
- if said difference value ($I_D$) is lower than or equal to said predefined threshold value ($I_{TH}$) or said output current ($I_B$) is not decreasing, determining that said battery (B) is not in a load dump condition.

10. Method, according to one of the claims from 7 to 9, **characterised in that**:

- said buck-conversion section (31) includes one or more buck-conversion branches electrically connected in parallel to said intermediate input terminals ($IN_3$, $IN_4$), each buck-conversion branch including a corresponding first buck-conversion transistor (T1, T2, T3) electrically connected between a first intermediate input terminal ($IN_3$) and a corresponding first intermediate node (N1, N2, N3) and including a corresponding second buck-conversion transistor (T4, T5, T6) electrically connected between a corresponding first intermediate node (N1, N2, N3) and a second intermediate input terminal ($IN_4$);
- said boost-conversion section (32) includes one or more boost-conversion branches electrically connected in parallel to said intermediate output terminals ($O_3$, $O_4$), each boost-conversion branch including a corresponding first boost-conversion transistor (T7, T8, T9) electrically connected between a first intermediate output terminal ($O_3$) and a corresponding second intermediate node (N4, N5, N6) and a corresponding second boost-conversion transistor (T10, T11, T12) electrically connected between a corresponding second intermediate node (N4, N5, N6) and a second intermediate output terminal ($O_4$);
- said inductive section (33) includes said inductors (L1, L2, L3) electrically connected between corresponding first intermediate nodes (N1, N2, N3) and second intermediate nodes (N4, N5, N6).

11. Method, according to claim 10, **characterised in that** said step c) includes:

- setting a duty-cycle value $D_{buck1}$=0 for said first buck-conversion transistors (T1, T2, T3);
- setting a duty-cycle value $D_{buck1}$=1 for said second buck-conversion transistors (T4, T5, T6);
- setting a duty-cycle value $D_{boost1}$=0 for said first boost-conversion transistors (T7, T8, T9);
- setting a duty-cycle value $D_{boost2}$=1 for said second boost-conversion transistors (T10, T11, T12).

12. Method, according to one of the claims from 7 to 11, **characterised in that** said step e) includes:

- checking whether the coil currents ($I_{L1}$, $I_{L2}$, $I_{L3}$) flowing along said inductors (L1, L2, L3) are null;
- if at least one for said coil currents ($I_{L1}$, $I_{L2}$, $I_{L3}$) is not null, determining that said inductors (L1, L2, L3) are still energized;
- if each of said coil currents ($I_{L1}$, $I_{L2}$, $I_{L3}$) is null, determining that said inductors (L1, L2, L3) are not energized anymore.

**Patentansprüche**

1. Batterieladevorrichtung (1), umfassend:

- eine Eingangsstufe (2), die Haupteingangsanschlüsse ($IN_1$, $IN_2$), die elektrisch mit einer elektrischen Wechselstromquelle (PW) verbindbar sind, und einen Gleichrichtungsabschnitt (20), der elektrisch mit den Haupteingangsanschlüssen verbunden ist, beinhaltet;
- eine Ausgangsstufe (5), die Hauptausgangsanschlüsse ($O_1$, $O_2$), die elektrisch mit einer Batterie (B) verbindbar sind, und mindestens einen Ausgangskondensator (C2), der elektrisch mit den Hauptausgangsanschlüssen verbunden ist, beinhaltet;
- eine DC/DC-Umwandlungsstufe (3), die Zwischeneingangsanschlüsse ($IN_3$, $IN_4$), die elektrisch mit der Eingangsstufe (2) verbunden sind, und Zwischenausgangsanschlüsse ($O_3$, $O_4$), die elektrisch mit der Ausgangsstufe (5) verbunden sind, beinhaltet, wobei die DC/DC-Umwandlungsstufe mindestens einen Eingangskondensator (C1), der elektrisch zwischen die Zwischeneingangsanschlüsse ($IN_3$, $IN_4$) geschaltet ist, einen DC/DC-Abwärts-Aufwärtswandler (30), umfassend einen Abwärtswandlungsabschnitt (31), der elektrisch zwischen die Zwischeneingangsanschlüsse ($IN_3$, $IN_4$) geschaltet ist und mehrere Abwärtswandlungstransistoren (T1, T2, T3, T4, T5, T6) beinhaltet, einen Aufwärtswandlungsabschnitt (32), der elektrisch zwischen die Zwischenausgangsanschlüsse ($O_3$, $O_4$) geschaltet ist und mehrere Aufwärtswandlungstransistoren (T7, T8, T9, T10, T11, T12) beinhaltet, und einen induktiven Abschnitt (33), der elektrisch zwischen den Abwärtswandlungsabschnitt (31) und den Aufwärtswandlungsabschnitt (32) geschaltet ist und eine oder mehrere Induktivitäten (L1, L2, L3) beinhaltet, umfasst;
- ein erstes Erfassungsmittel (7), eingerichtet zum Bereitstellen von ersten Detektionssignalen (S1), die einen oder mehrere entlang der Induktivitäten (L1, L2, L3) fließende Spulenströme ($I_{L1}$, $I_{L2}$, $I_{L3}$) angeben;
- ein zweites Erfassungsmittel (8), eingerichtet zum Bereitstellen von zweiten Detektionssignalen (S2), die einen Ausgangsstrom ($I_B$) angeben, der der Batterie durch die Batterieladevorrichtung bereitgestellt wird;
- eine Steuereinheit (6) zum Steuern des Betriebs der Batterieladevorrichtung, wobei die Steuereinheit mit dem ersten und dem zweiten Erfassungsmittel betriebsgekoppelt ist und zum Steuern der Abwärtswandlungstransistoren und der Aufwärtswandlungstransistoren eingerichtet ist;

**dadurch gekennzeichnet, dass** die Steuereinheit (6) zum Ausführen eines Lastverlustschutzverfahrens (100) eingerichtet ist, das die folgenden Schritte beinhaltet:

a) Erfassen von ersten und zweiten Messdaten ($S_1$, $S_2$) bezüglich des Verhaltens der Spulenströme ($I_{L1}$, $I_{L2}$, $I_{L3}$) und des Ausgangsstroms ($I_B$) von dem ersten und dem zweiten Erfassungsmittel (7, 8);

b) Verarbeiten der ersten und zweiten Messdaten ($S_1$, $S_2$), um zu bestimmen, ob sich die Batterie (B) in einem Lastverlustzustand befindet;

c) wenn bestimmt wird, dass sich die Batterie (B) in einem Lastverlustzustand befindet, Steuern der Abwärtswandlungstransistoren und der Aufwärtswandlungstransistoren, sodass die entlang der Induktivitäten (L1, L2, L3) fließenden Spulenströme ($I_{L1}$, $I_{L2}$, $I_{L3}$) innerhalb der DC/DC-Umwandlungsstufe rezirkuliert werden, ohne den Ausgangskondensator (C2) zu laden;

d) Erfassen von ersten Messdaten ($S_1$) bezüglich des Verhaltens der Spulenströme ($I_{L1}$, $I_{L2}$, $I_{L3}$) von dem ersten Erfassungsmittel (7);

e) Verarbeiten der ersten Messdaten ($S_1$), um zu bestimmen, ob die Induktivitäten (L1, L2, L3) weiterhin erregt sind;

f) wenn bestimmt wird, dass die Induktivitäten (L1, L2, L3) weiterhin erregt sind, Wiederholen der vorherigen Schritte d)-e);

g) wenn bestimmt wird, dass die Induktivitäten (L1, L2, L3) nicht mehr erregt sind, Steuern des Abwärtswandlungstransistors und des Aufwärtswandlungstransistors, sodass Energie von dem Ausgangskondensator (C2) zu dem Eingangskondensator (C1) übertragen wird.

2. Batterieladevorrichtung nach Anspruch 1, **dadurch gekennzeichnet, dass** Schritt b) des Lastverlustschutzverfahrens (100) Folgendes beinhaltet:

- Berechnen eines erwarteten Werts ($I_{EB}$) für den Ausgangsstrom;
- Berechnen eines Differenzwerts ($I_D$) zwischen dem erwarteten Wert und dem gemessenen Wert ($I_B$) des Ausgangsstroms;
- Vergleichen des Differenzwerts ($I_D$) mit einem vordefinierten Schwellenwert ($I_{TH}$);
- wenn der Differenzwert ($I_D$) höher als der vordefinierte Schwellenwert ($I_{TH}$) ist, Bestimmen, dass sich die Batterie (B) in einem Lastverlustzustand befindet;
- wenn der Differenzwert ($I_D$) kleiner oder gleich dem vordefinierten Schwellenwert ($I_{TH}$) ist, Bestimmen, dass sich die Batterie (B) nicht in einem Lastverlustzustand befindet.

3. Batterieladevorrichtung nach einem der vorhergehenden Ansprüche, **dadurch gekennzeichnet, dass** Schritt b) des Lastverlustschutzverfahrens (100) Folgendes beinhaltet:

- Berechnen eines erwarteten Werts ($I_{EB}$) für den Ausgangsstrom;
- Berechnen eines Differenzwerts ($I_D$) zwischen dem erwarteten Wert und dem gemessenen Wert ($I_B$) des Ausgangsstroms;
- Vergleichen des Differenzwerts ($I_D$) mit einem vordefinierten Schwellenwert ($I_{TH}$);
- Prüfen, ob der Ausgangsstrom abnimmt;
- wenn der Differenzwert ($I_D$) höher als der vordefinierte Schwellenwert ($I_{TH}$) ist und der Ausgangsstrom ($I_B$) abnimmt, Bestimmen, dass sich die Batterie (B) in einem Lastverlustzustand befindet;
- wenn der Differenzwert ($I_D$) kleiner oder gleich dem vordefinierten Schwellenwert ($I_{TH}$) ist oder der Ausgangsstrom ($I_B$) nicht abnimmt, Bestimmen, dass sich die Batterie (B) nicht in einem Lastverlustzustand befindet.

4. Batterieladevorrichtung nach einem der vorhergehenden Ansprüche, **dadurch gekennzeichnet, dass**:

- der Abwärtswandlungsabschnitt (31) einen oder mehrere Abwärtswandlungszweige beinhaltet, die elektrisch mit den Zwischeneingangsanschlüssen ($IN_3$, $IN_4$) parallel geschaltet sind, wobei jeder Abwärtswandlungszweig einen entsprechenden ersten Abwärtswandlungstransistor (T1, T2, T3), der elektrisch zwischen einen ersten Zwischeneingangsanschluss ($IN_3$) und einen entsprechenden ersten Zwischenknoten (N1, N2, N3) geschaltet ist, beinhaltet und einen entsprechenden zweiten Abwärtswandlungstransistor (T4, T5, T6), der elektrisch zwischen einen entsprechenden ersten Zwischenknoten (N1, N2, N3) und einen zweiten Zwischeneingangsanschluss ($IN_4$) geschaltet ist, beinhaltet;
- der Aufwärtswandlungsabschnitt (32) einen oder mehrere Aufwärtswandlungszweige beinhaltet, die elektrisch mit den Zwischenausgangsanschlüssen ($O_3$, $O_4$) parallel geschaltet sind, wobei jeder Aufwärtswandlungszweig einen entsprechenden ersten Aufwärtswandlungstransistor (T7, T8, T9), der elektrisch zwischen einen ersten Zwischenausgangsanschluss ($O_3$) und einen entsprechenden zweiten Zwischenknoten (N4, N5, N6) geschaltet ist, und einen entsprechenden zweiten Aufwärtswandlungstransistor (T10, T11, T12), der elektrisch zwischen einen entsprechenden zweiten Zwischenknoten (N4, N5, N6) und einen zweiten Zwischenausgangsanschluss ($O_4$) geschaltet ist, beinhaltet;
- der induktive Abschnitt (33) die elektrisch zwischen entsprechende erste Zwischenknoten (N1, N2, N3) und zweite Zwischenknoten (N4, N5, N6) geschalteten Induktivitäten (L1, L2, L3) beinhaltet.

**5.** Batterieladevorrichtung nach Anspruch 4, **dadurch gekennzeichnet, dass** Schritt c) des Lastverlustschutzverfahrens (100) Folgendes beinhaltet:

- Festlegen eines Tastgradwerts $D_{buck1}$=0 für die ersten Abwärtswandlungstransistoren (T1, T2, T3);
- Festlegen eines Tastgradwerts $D_{buck1}$=1 für die zweiten Abwärtswandlungstransistoren (T4, T5, T6);
- Festlegen eines Tastgradwerts $D_{boost1}$=0 für die ersten Aufwärtswandlungstransistoren (T7, T8, T9);
- Festlegen eines Tastgradwerts $D_{boost2}$=1 für die zweiten Aufwärtswandlungstransistoren (T10, T11, T12).

**6.** Batterieladevorrichtung nach einem der vorhergehenden Ansprüche, **dadurch gekennzeichnet, dass** Schritt e) des Lastverlustschutzverfahrens (100) Folgendes beinhaltet:

- Prüfen, ob die entlang der Induktivitäten (L1, L2, L3) fließenden Spulenströme ($I_{L1}$, $I_{L2}$, $I_{L3}$) gleich null sind;
- wenn mindestens einer der Spulenströme ($I_{L1}$, $I_{L2}$, $I_{L3}$) ungleich null ist, Bestimmen, dass die Induktivitäten (L1, L2, L3) weiterhin erregt sind;
- wenn jeder der Spulenströme ($I_{L1}$, $I_{L2}$, $I_{L3}$) gleich null ist, Bestimmen, dass die Induktivitäten (L1, L2, L3) nicht mehr erregt sind.

**7.** Lastverlustschutzverfahren (100) für eine Batterieladevorrichtung (1), wobei die Batterieladevorrichtung Folgendes umfasst:

- eine Eingangsstufe (2), die Haupteingangsanschlüsse (IN1, IN2), die elektrisch mit einer elektrischen Wechselstromquelle (PW) verbindbar sind, und einen Gleichrichtungsabschnitt (20), der elektrisch mit den Haupteingangsanschlüssen (IN1, IN2) verbunden ist, beinhaltet;
- eine Ausgangsstufe (5), die Hauptausgangsanschlüsse (01, O2), die elektrisch mit einer Batterie (B) verbindbar sind, und mindestens einen Ausgangskondensator (C2), der elektrisch mit den Hauptausgangsanschlüssen verbunden ist, beinhaltet;
- eine DC/DC-Umwandlungsstufe (3), die Zwischeneingangsanschlüsse ($IN_3$, $IN_4$), die elektrisch mit der Eingangsstufe (2) verbunden sind, und Zwischenausgangsanschlüsse ($O_3$, $O_4$), die elektrisch mit der Ausgangsstufe (5) verbunden sind, beinhaltet, wobei die DC/DC-Umwandlungsstufe mindestens einen Eingangskondensator (C1), der elektrisch zwischen die Zwischeneingangsanschlüsse ($IN_3$, $IN_4$) geschaltet ist, einen DC/DC-Abwärts-Aufwärts-

wandler (30), umfassend einen Abwärtswand-lungsabschnitt (31), der elektrisch zwischen die Zwischeneingangsanschlüsse ($IN_3$, $IN_4$) geschaltet ist und mehrere Abwärtswandlungstransistoren (T1, T2, T3, T4, T5, T6) beinhaltet, einen Aufwärtswandlungsabschnitt (32), der elektrisch zwischen die Zwischenausgangsan-schlüsse ($O_3$, $O_4$) geschaltet ist und mehrere Aufwärtswandlungstransistoren (T7, T8, T9, T10, T11, T12) beinhaltet, und einen induktiven Abschnitt (33), der elektrisch zwischen den Abwärtswandlungsabschnitt (31) und den Aufwärtswandlungsabschnitt (32) geschaltet ist und eine oder mehrere Induktivitäten (L1, L2, L3) beinhaltet, umfasst;
- ein erstes Erfassungsmittel (7), eingerichtet zum Bereitstellen von ersten Detektionssignalen (S1), die einen oder mehrere entlang der Induktivitäten (L1, L2, L3) fließende Spulenströme ($I_{L1}$, $I_{L2}$, $I_{L3}$) angeben;
- ein zweites Erfassungsmittel (8), eingerichtet zum Bereitstellen von zweiten Detektionssignalen (S2), die einen Ausgangsstrom ($I_B$) angeben, der der Batterie durch die Batterieladevorrichtung bereitgestellt wird; **dadurch gekennzeichnet, dass** es die folgenden Schritte umfasst:

a) Erfassen von ersten und zweiten Messdaten (S1, S2) bezüglich des Verhaltens der Spulenströme ($I_{L1}$, $I_{L2}$, $I_{L3}$) und des Ausgangsstroms ($I_B$) von dem ersten und dem zweiten Erfassungsmittel (7, 8);
b) Verarbeiten der ersten und zweiten Messdaten (S1, S2), um zu bestimmen, ob sich die Batterie (B) in einem Lastverlustzustand befindet;
c) wenn bestimmt wird, dass sich die Batterie (B) in einem Lastverlustzustand befindet, Steuern der Abwärtswandlungstransis-toren und der Aufwärtswandlungstransisto-ren, sodass die Spulenströme ($I_{L1}$, $I_{L2}$, $I_{L3}$) innerhalb der DC/DC-Umwandlungsstufe rezirkuliert werden, ohne den Ausgangskondensator (C2) zu laden;
d) Erfassen von ersten Messdaten (S1) bezüglich des Verhaltens der Spulenströme ($I_{L1}$, $I_{L2}$, $I_{L3}$) von dem ersten Erfassungsmittel (7);
e) Verarbeiten der ersten Messdaten (S1), um zu bestimmen, ob die Induktivitäten (L1, L2, L3) weiterhin erregt sind;
f) wenn bestimmt wird, dass die Induktivitäten (L1, L2, L3) weiterhin erregt sind, Wiederholen der vorherigen Schritte d)-e);
g) wenn bestimmt wird, dass die Induktivitäten (L1, L2, L3) nicht mehr erregt sind, Steuern des Abwärtswandlungstransistors und des Aufwärtswandlungstransistors, sodass Energie von dem Ausgangskondensator zu den Eingangskondensator übertragen wird.

8. Verfahren nach Anspruch 7, **dadurch gekennzeichnet, dass** Schritt b) Folgendes beinhaltet:

- Berechnen eines erwarteten Werts ($I_{EB}$) für den Ausgangsstrom;
- Berechnen eines Differenzwerts ($I_D$) zwischen dem erwarteten Wert und dem gemessenen Wert ($I_B$) des Ausgangsstroms;
- Vergleichen des Differenzwerts ($I_D$) mit einem vordefinierten Schwellenwert ($I_{TH}$);
- wenn der Differenzwert ($I_D$) höher als der vordefinierte Schwellenwert ($I_{TH}$) ist, Bestimmen, dass sich die Batterie (B) in einem Lastverlustzustand befindet;
- wenn der Differenzwert ($I_D$) kleiner oder gleich dem vordefinierten Schwellenwert ($I_{TH}$) ist, Bestimmen, dass sich die Batterie (B) nicht in einem Lastverlustzustand befindet.

9. Verfahren nach einem der Ansprüche 7 bis 8, **dadurch gekennzeichnet, dass** Schritt b) Folgendes beinhaltet:

- Berechnen eines erwarteten Werts ($I_{EB}$) für den Ausgangsstrom;
- Berechnen eines Differenzwerts ($I_D$) zwischen dem erwarteten Wert und dem gemessenen Wert ($I_B$) des Ausgangsstroms;
- Vergleichen des Differenzwerts ($I_D$) mit einem vordefinierten Schwellenwert ($I_{TH}$);
- Prüfen, ob der Ausgangsstrom abnimmt;
- wenn der Differenzwert ($I_D$) höher als der vordefinierte Schwellenwert ($I_{TH}$) ist und der Ausgangsstrom abnimmt, Bestimmen, dass sich die Batterie (B) in einem Lastverlustzustand befindet;
- wenn der Differenzwert ($I_D$) kleiner oder gleich dem vordefinierten Schwellenwert ($I_{TH}$) ist oder der Ausgangsstrom ($I_B$) nicht abnimmt, Bestimmen, dass sich die Batterie (B) nicht in einem Lastverlustzustand befindet.

10. Verfahren nach einem der Ansprüche 7 bis 9, **dadurch gekennzeichnet, dass**:

- der Abwärtswandlungsabschnitt (31) einen oder mehrere Abwärtswandlungszweige beinhaltet, die elektrisch mit den Zwischeneingangsanschlüssen ($IN_3$, $IN_4$) parallel geschaltet sind, wobei jeder Abwärtswandlungszweig einen entsprechenden ersten Abwärtswandlungstransistor (T1, T2, T3), der elektrisch zwischen einen ersten Zwischeneingangsanschluss ($IN_3$) und einen entsprechenden ersten Zwischenknoten (N1, N2, N3) geschaltet ist, beinhaltet und einen entsprechenden zweiten Abwärtswandlungstransistor (T4, T5, T6), der elektrisch zwischen einen entsprechenden ersten Zwischenknoten (N1, N2, N3) und einen zweiten Zwischeneingangsanschluss ($IN_4$) geschaltet ist, beinhaltet;
- der Aufwärtswandlungsabschnitt (32) einen oder mehrere Aufwärtswandlungszweige beinhaltet, die elektrisch mit den Zwischenausgangsanschlüssen ($O_3$, $O_4$) parallel geschaltet sind, wobei jeder Aufwärtswandlungszweig einen entsprechenden ersten Aufwärtswandlungstransistor (T7, T8, T9), der elektrisch zwischen einen ersten Zwischenausgangsanschluss ($O_3$) und einen entsprechenden zweiten Zwischenknoten (N4, N5, N6) geschaltet ist, und einen entsprechenden zweiten Aufwärtswandlungstransistor (T10, T11, T12), der elektrisch zwischen einen entsprechenden zweiten Zwischenknoten (N4, N5, N6) und einen zweiten Zwischenausgangsanschluss ($O_4$) geschaltet ist, beinhaltet;
- der induktive Abschnitt (33) die elektrisch zwischen entsprechende erste Zwischenknoten (N1, N2, N3) und zweite Zwischenknoten (N4, N5, N6) geschalteten Induktivitäten (L1, L2, L3) beinhaltet.

11. Verfahren nach Anspruch 10, **dadurch gekennzeichnet, dass** Schritt c) Folgendes beinhaltet:

- Festlegen eines Tastgradwerts $D_{buck1}=0$ für die ersten Abwärtswandlungstransistoren (T1, T2, T3);
- Festlegen eines Tastgradwerts $D_{buck1}=1$ für die zweiten Abwärtswandlungstransistoren (T4, T5, T6);
- Festlegen eines Tastgradwerts $D_{boost1}=0$ für die ersten Aufwärtswandlungstransistoren (T7, T8, T9);
- Festlegen eines Tastgradwerts $D_{boost2}=1$ für die zweiten Aufwärtswandlungstransistoren (T10, T11, T12).

12. Verfahren nach einem der Ansprüche 7 bis 11, **dadurch gekennzeichnet, dass** Schritt e) Folgendes beinhaltet:

- Prüfen, ob die entlang der Induktivitäten (L1, L2, L3) fließenden Spulenströme ($I_{L1}$, $I_{L2}$, $I_{L3}$) gleich null sind;
- wenn mindestens einer der Spulenströme ($I_{L1}$, $I_{L2}$, $I_{L3}$) ungleich null ist, Bestimmen, dass die Induktivitäten (L1, L2, L3) weiterhin erregt sind;
- wenn jeder der Spulenströme ($I_{L1}$, $I_{L2}$, $I_{L3}$) gleich null ist, Bestimmen, dass die Induktivitäten (L1, L2, L3) nicht mehr erregt sind.

## Revendications

1. Dispositif chargeur de batterie (1) comprenant :

   - un étage d'entrée (2) comportant des bornes d'entrée principales ($IN_1$, $IN_2$) pouvant être connectées électriquement à une source de puissance électrique CA (PW) et une section de redressement (20) connectée électriquement auxdites bornes d'entrée principales ;
   - un étage de sortie (5) comportant des bornes de sortie principales ($O_1$, $O_2$) pouvant être connectées électriquement à une batterie (B) et au moins un condensateur de sortie (C2) connecté électriquement auxdites bornes de sortie principales ;
   - un étage de conversion CC/CC (3) comportant des bornes d'entrée intermédiaires ($IN_3$, $IN_4$) connectées électriquement audit étage d'entrée (2) et des bornes de sortie intermédiaires ($O_3$, $O_4$) connectées électriquement audit étage de sortie (5), ledit étage de conversion CC/CC comprenant au moins un condensateur d'entrée (C1) connecté électriquement entre lesdites bornes d'entrée intermédiaires ($IN_3$, $IN_4$), un convertisseur abaisseurélévateur CC/CC (30) comprenant une section d'abaissement (31) connectée électriquement entre lesdites bornes d'entrée intermédiaires ($IN_3$, $IN_4$) et comportant une pluralité de transistors d'abaissement (T1, T2, T3, T4, T5, T6), une section d'élévation (32) connectée électriquement entre lesdites bornes de sortie intermédiaires ($O_3$, $O_4$) et comportant une pluralité de transistors d'élévation (T7, T8, T9, T10, T11, T12), et une section inductive (33) connectée électriquement entre ladite section d'abaissement (31) et ladite section d'élévation (32) et comportant une ou plusieurs bobines d'inductance (L1, L2, L3) ;
   - un premier moyen de détection (7) conçu pour fournir des premiers signaux de détection (S1) indiquant un ou plusieurs courants de bobines ($I_{L1}$, $I_{L2}$, $I_{L3}$) circulant le long desdites bobines d'inductance (L1, L2, L3) ;
   - un deuxième moyen de détection (8) conçu pour fournir des deuxièmes signaux de détection (S2) indiquant un courant de sortie ($I_B$) fourni par ledit dispositif de charge de batterie à ladite batterie ;
   - une unité de commande (6) pour commander un fonctionnement dudit dispositif chargeur de batterie, ladite unité de commande étant couplée de manière fonctionnelle auxdits premier et deuxième moyens de détection et étant conçue pour commander lesdits transistors d'abaissement et lesdits transistors d'élévation ;

   **caractérisé en ce que** ladite unité de commande (6) est conçue pour réaliser un procédé de protection contre les coupures d'alimentation électrique (100) comportant les étapes suivantes :

   a) acquisition de premières et deuxièmes données de mesure (S1, S2) liées au comportement desdits courants de bobine ($I_{L1}$, $I_{L2}$, $I_{L3}$) et dudit courant de sortie ($I_B$) provenant desdits premier et deuxième moyens de détection (7, 8) ;
   b) traitement desdites premières et deuxièmes données de mesure (S1, S2) pour déterminer si ladite batterie (B) est ou non dans un état de coupure d'alimentation électrique ;
   c) s'il est déterminé que ladite batterie (B) est dans un état de coupure d'alimentation électrique, commande desdits transistors d'abaissement et desdits transistors d'élévation, de sorte que les courants de bobine ($I_{L1}$, $I_{L2}$, $I_{L3}$) circulant le long desdites bobines d'inductance (L1, L2, L3) sont remis en circulation dans ledit étage de conversion CC/CC sans charger ledit condensateur de sortie (C2) ;
   d) acquisition de premières données de mesure (S1) liées au comportement desdits courants de bobine ($I_{L1}$, $I_{L2}$, $I_{L3}$) provenant dudit premier moyen de détection (7) ;
   e) traitement desdites premières données de mesure (S1) pour déterminer si lesdites bobines d'inductance (L1, L2, L3) sont encore excitées ou non ;
   f) s'il est déterminé que lesdites bobines d'inductance (L1, L2, L3) sont encore excitées, répétition des étapes d) et e) précédentes ;
   g) s'il est déterminé que lesdites bobines d'inductance (L1, L2, L3) ne sont plus excitées, commande desdits transistors d'abaissement et desdits transistors d'élévation, de sorte que de l'énergie est transférée dudit condensateur de sortie (C2) audit condensateur d'entrée (C1).

2. Dispositif de charge de batterie, selon la revendication 1, **caractérisé en ce que** l'étape b) dudit procédé de protection contre les coupures d'alimentation électrique (100) comporte :

   - le calcul d'une valeur attendue ($I_{EB}$) pour ledit courant de sortie ;
   - le calcul d'une valeur de différence ($I_D$) entre ladite valeur attendue et une valeur mesurée ($I_B$) dudit courant de sortie ;
   - la comparaison de ladite valeur de différence ($I_D$) avec une valeur seuil prédéfinie ($I_{TH}$) ;
   - si ladite valeur de différence ($I_D$) est supérieure à ladite valeur seuil prédéfinie ($I_{TH}$), la détermination que ladite batterie (B) est dans un état de coupure d'alimentation électrique ;
   - si ladite valeur de différence ($I_D$) est inférieure ou égale à ladite valeur seuil prédéfinie ($I_{TH}$), la détermination que ladite batterie (B) n'est pas dans un état de coupure d'alimentation électrique.

3. Dispositif de charge de batterie, selon l'une des revendications précédentes, **caractérisé en ce que** l'étape b) dudit procédé de protection contre les coupures d'alimentation électrique (100) comporte :

- le calcul d'une valeur attendue ($I_{EB}$) pour ledit courant de sortie ;
- le calcul d'une valeur de différence ($I_D$) entre ladite valeur attendue et une valeur mesurée ($I_B$) dudit courant de sortie ;
- la comparaison de ladite valeur de différence ($I_D$) avec une valeur seuil prédéfinie ($I_{TH}$) ;
- la vérification si ledit courant de sortie diminue ou non ;
- si ladite valeur de différence ($I_D$) est supérieure à une valeur seuil prédéfinie ($I_{TH}$) et que ledit courant de sortie ($I_B$) diminue, la détermination que ladite batterie (B) est dans un état de coupure d'alimentation électrique ;
- si ladite valeur de différence ($I_D$) est inférieure ou égale à ladite valeur seuil prédéfinie ($I_{TH}$) ou que ledit courant de sortie ($I_B$) ne diminue pas, la détermination que ladite batterie (B) n'est pas dans un état de coupure d'alimentation électrique.

4. Dispositif de charge de batterie selon l'une des revendications précédentes, **caractérisé en ce que** :

- ladite section d'abaissement (31) comporte une ou plusieurs branches d'abaissement connectées électriquement en parallèle auxdites bornes d'entrée intermédiaires ($IN_3$, $IN_4$), chaque branche d'abaissement comportant un premier transistor d'abaissement (T1, T2, T3) correspondant connecté électriquement entre une première borne d'entrée intermédiaire ($IN_3$) et un premier noeud intermédiaire (N1, N2, N3) correspondant et comportant un deuxième transistor d'abaissement (T4, T5, T6) correspondant connecté électriquement entre un premier noeud intermédiaire (N1, N2, N3) correspondant et une deuxième borne d'entrée intermédiaire ($IN_4$) ;
- ladite section d'élévation (32) comportant une ou plusieurs branches d'élévation connectées électriquement en parallèle auxdites bornes de sortie intermédiaires ($O_3$, $O_4$), chaque branche d'élévation comportant un premier transistor d'élévation (T7, T8, T9) correspondant connecté électriquement entre une première borne de sortie intermédiaire ($O_3$) et un deuxième noeud intermédiaire (N4, N5, N6) correspondant et un deuxième transistor d'élévation (T10, T11, T12) correspondant connecté électriquement entre un deuxième noeud intermédiaire (N4, N5, N6) correspondant et une deuxième borne de sortie intermédiaire ($O_4$) ;
- ladite section inductive (33) comportant lesdites bobines d'inductance (L1, L2, L3) connectées électriquement entre des premiers noeuds intermédiaires (N1, N2, N3) et des deuxièmes noeuds intermédiaires (N4, N5, N6) correspondants.

5. Dispositif de charge de batterie, selon la revendication 4, **caractérisé en ce que** l'étape c) dudit procédé de protection contre les coupures d'alimentation électrique (100) comporte :

- la définition d'une valeur de rapport cyclique $D_{buck1} = 0$ pour lesdits premiers transistors d'abaissement (T1, T2, T3) ;
- la définition d'une valeur de rapport cyclique $D_{buck1} = 1$ pour lesdits deuxièmes transistors d'abaissement (T4, T5, T6) ;
- la définition d'une valeur de rapport cyclique $D_{boost1} = 0$ pour lesdits premiers transistors d'élévation (T7, T8, T9) ;
- la définition d'une valeur de rapport cyclique $D_{boost2} = 1$ pour lesdits deuxièmes transistors d'élévation (T10, T11, T12).

6. Dispositif de charge de batterie, selon l'une des revendications précédentes, **caractérisé en ce que** l'étape e) dudit procédé de protection contre les coupures d'alimentation électrique (100) comprend :

- la vérification si les courants de bobine ($I_{L1}$, $I_{L2}$, $I_{L3}$) circulant le long desdites bobines d'inductance (L1, L2, L3) sont nuls ;
- si au moins un desdits courants de bobine ($I_{L1}$, $I_{L2}$, $I_{L3}$) n'est pas nul, la détermination que lesdites bobines d'inductance (L1, L2, L3) sont encore excitées ;
- si chacun desdits courants de bobine ($I_{L1}$, $I_{L2}$, $I_{L3}$) est nul, la détermination que lesdites bobines d'inductance (L1, L2, L3) ne sont plus excitées.

7. Procédé de protection contre les coupures d'alimentation électrique (100) pour un dispositif chargeur de batterie (1), ledit dispositif de charge de batterie comprenant :

- un étage d'entrée (2) comportant des bornes d'entrée principales (IN1, IN2) pouvant être connectées électriquement à une source de puissance électrique CA (PW) et une section de redressement (20) connectée électriquement auxdites bornes d'entrée principales (IN1, IN2) ;
- un étage de sortie (5) comportant des bornes de sortie principales (01, O2) pouvant être connectées électriquement à une batterie (B) et au moins un condensateur de sortie (C2) connecté électriquement auxdites bornes de sortie principales ;

un étage de conversion CC/CC (3) comportant des bornes d'entrée intermédiaires ($IN_3$, $IN_4$) connectées électriquement audit étage d'entrée (2) et des bornes de sortie intermédiaires ($O_3$, $O_4$) connectées électriquement audit étage de sortie (5), ledit étage de conversion CC/CC comprenant au moins un condensateur d'entrée (C1) connecté électriquement entre lesdites bornes d'entrée intermédiaires ($IN_3$, $IN_4$), un convertisseur abaisseur-élévateur CC/CC (30) comprenant une section d'abaissement (31) connectée électriquement entre lesdites bornes d'entrée intermédiaires ($IN_3$, $IN_4$) et comportant une pluralité de transistors d'abaissement (T1, T2, T3, T4, T5, T6), une section d'élévation (32) connectée électriquement entre lesdites bornes de sortie intermédiaires ($O_3$, $O_4$) et comportant une pluralité de transistors d'élévation (T7, T8, T9, T10, T11, T12), et une section inductive (33) connectée électriquement entre ladite section d'abaissement (31) et ladite section d'élévation (32) et comportant une ou plusieurs bobines d'inductance (L1, L2, L3) ;

- un premier moyen de détection (7) conçu pour fournir des premiers signaux de détection (S1) indiquant un ou plusieurs courants de bobines ($I_{L1}$, $I_{L2}$, $I_{L3}$) circulant le long desdites bobines d'inductance (L1, L2, L3) ;

- un deuxième moyen de détection (8) conçu pour fournir des deuxièmes signaux de détection (S2) indiquant un courant de sortie ($I_B$) fourni par ledit dispositif de charge de batterie à ladite batterie ;

**caractérisé en ce qu'**il comprend les étapes suivantes :

    a) acquisition de premières et deuxièmes données de mesure (S1, S2) liées au comportement desdits courants de bobine ($I_{L1}$, $I_{L2}$, $I_{L3}$) et dudit courant de sortie ($I_B$) provenant desdits premier et deuxième moyens de détection (7, 8) ;

    b) traitement desdites premières et deuxièmes données de mesure (S1, S2) pour déterminer si ladite batterie (B) est ou non dans un état de coupure d'alimentation électrique ;

    c) s'il est déterminé que ladite batterie (B) est dans un état de coupure d'alimentation électrique, commande desdits transistors d'abaissement et desdits transistors d'élévation, de sorte que lesdits courants de bobine ($I_{L1}$, $I_{L2}$, $I_{L3}$) sont remis en circulation dans ledit étage de conversion CC/CC sans charger ledit condensateur de sortie (C2) ;

    d) acquisition de premières données de mesure (S1) liées au comportement desdits courants de bobine ($I_{L1}$, $I_{L2}$, $I_{L3}$) provenant dudit premier moyen de détection (7) ;

    e) traitement desdites premières données de mesure (S1) pour déterminer si lesdites bobines d'inductance (L1, L2, L3) sont encore excitées ou non ;

    f) s'il est déterminé que lesdites bobines d'inductance (L1, L2, L3) sont encore excitées, répétition des étapes d) et e) précédentes ;

    g) s'il est déterminé que lesdites bobines d'inductance (L1, L2, L3) ne sont plus excitées, commande desdits transistors d'abaissement et desdits transistors d'élévation, de sorte que de l'énergie est transférée dudit condensateur de sortie audit condensateur d'entrée.

8. Procédé, selon la revendication 7, **caractérisé en ce que** ladite étape b) comporte :

    - le calcul d'une valeur attendue ($I_{EB}$) pour ledit courant de sortie ;
    - le calcul d'une valeur de différence ($I_D$) entre ladite valeur attendue et une valeur mesurée ($I_B$) dudit courant de sortie ;
    - la comparaison de ladite valeur de différence ($I_D$) avec une valeur seuil prédéfinie ($I_{TH}$) ;
    - si ladite valeur de différence ($I_D$) est supérieure à ladite valeur seuil prédéfinie ($I_{TH}$), la détermination que ladite batterie (B) est dans un état de coupure d'alimentation électrique ;
    - si ladite valeur de différence ($I_D$) est inférieure ou égale à ladite valeur seuil prédéfinie ($I_{TH}$), la détermination que ladite batterie (B) n'est pas dans un état de coupure d'alimentation électrique.

9. Procédé, selon l'une des revendications 7 à 8, **caractérisé en ce que** ladite étape b) comporte :

    - le calcul d'une valeur attendue ($I_{EB}$) pour ledit courant de sortie ;
    - le calcul d'une valeur de différence ($I_D$) entre ladite valeur attendue et une valeur mesurée ($I_B$) dudit courant de sortie ;
    - la comparaison de ladite valeur de différence ($I_D$) avec une valeur seuil prédéfinie ($I_{TH}$) ;
    - la vérification si ledit courant de sortie diminue ou non ;
    - si ladite valeur de différence ($I_D$) est supérieure à une valeur seuil prédéfinie ($I_{TH}$) et que ledit courant de sortie diminue, la détermination que ladite batterie (B) est dans un état de coupure d'alimentation électrique ;

- si ladite valeur de différence ($I_D$) est inférieure ou égale à ladite valeur seuil prédéfinie ($I_{TH}$) ou que ledit courant de sortie ($I_B$) ne diminue pas, la détermination que ladite batterie (B) n'est pas dans un état de coupure d'alimentation électrique.

**10.** Procédé, selon l'une des revendications 7 à 9, **caractérisé en ce que** :

- ladite section d'abaissement (31) comporte une ou plusieurs branches d'abaissement connectées électriquement en parallèle auxdites bornes d'entrée intermédiaires ($IN_3$, $IN_4$), chaque branche d'abaissement comportant un premier transistor d'abaissement (T1, T2, T3) correspondant connecté électriquement entre une première borne d'entrée intermédiaire ($IN_3$) et un premier noeud intermédiaire (N1, N2, N3) correspondant et comportant un deuxième transistor d'abaissement (T4, T5, T6) correspondant connecté électriquement entre un premier noeud intermédiaire (N1, N2, N3) correspondant et une deuxième borne d'entrée intermédiaire ($IN_4$) ;
- ladite section d'élévation (32) comportant une ou plusieurs branches d'élévation connectées électriquement en parallèle auxdites bornes de sortie intermédiaires ($O_3$, $O_4$), chaque branche d'élévation comportant un premier transistor d'élévation (T7, T8, T9) correspondant connecté électriquement entre une première borne de sortie intermédiaire ($O_3$) et un deuxième noeud intermédiaire (N4, N5, N6) correspondant et un deuxième transistor d'élévation (T10, T11, T12) correspondant connecté électriquement entre un deuxième noeud intermédiaire (N4, N5, N6) correspondant et une deuxième borne de sortie intermédiaire ($O_4$) ;
- ladite section inductive (33) comportant lesdites bobines d'inductance (L1, L2, L3) connectées électriquement entre des premiers noeuds intermédiaires (N1, N2, N3) et des deuxièmes intermédiaires (N4, N5, N6) correspondants.

**11.** Procédé, selon la revendication 10, **caractérisé en ce que** ladite étape c) comporte :

- la définition d'une valeur de rapport cyclique $D_{buck1}$ = 0 pour lesdits premiers transistors d'abaissement (T1, T2, T3) ;
- la définition d'une valeur de rapport cyclique $D_{buck1}$ = 1 pour lesdits deuxièmes transistors d'abaissement (T4, T5, T6) ;
- la définition d'une valeur de rapport cyclique $D_{boost1}$ = 0 pour lesdits premiers transistors d'élévation (T7, T8, T9) ;

- la définition d'une valeur de rapport cyclique $D_{boost2}$ = 1 pour lesdits deuxièmes transistors d'élévation (T10, T11, T12).

**12.** Procédé, selon l'une des revendications 7 à 11, **caractérisé en ce que** ladite étape e) comporte :

- la vérification si les courants de bobine ($I_{L1}$, $I_{L2}$, $I_{L3}$) circulant le long desdites bobines d'inductance (L1, L2, L3) sont nuls ou non ;
- si au moins un desdits courants de bobine ($I_{L1}$, $I_{L2}$, $I_{L3}$) n'est pas nul, la détermination que lesdites bobines d'inductance (L1, L2, L3) sont encore excitées ;
- si chacun desdits courants de bobine ($I_{L1}$, $I_{L2}$, $I_{L3}$) est nul, la détermination que lesdites bobines d'inductance (L1, L2, L3) ne sont plus excitées.

FIG. 1

FIG. 2

EP 3 772 152 B1

FIG. 3

**FIG. 4**

FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2015123631 A1